(19) Europäisches Patentamt / European Patent Office / Office européen des brevets

(11) **EP 4 700 894 A1**

(12) **EUROPEAN PATENT APPLICATION**
published in accordance with Art. 153(4) EPC

(43) Date of publication:
**25.02.2026 Bulletin 2026/09**

(21) Application number: **24907813.0**

(22) Date of filing: **20.11.2024**

(51) International Patent Classification (IPC):
$H01M\ 10/0567^{(2010.01)}$    $H01M\ 4/58^{(2010.01)}$
$H01M\ 4/36^{(2006.01)}$    $H01M\ 10/052^{(2010.01)}$
$H01M\ 4/38^{(2006.01)}$    $H01M\ 4/48^{(2010.01)}$
$H01M\ 4/587^{(2010.01)}$    $H01M\ 10/0569^{(2010.01)}$
$H01M\ 4/02^{(2006.01)}$

(52) Cooperative Patent Classification (CPC):
H01M 4/02; H01M 4/36; H01M 4/38; H01M 4/48;
H01M 4/58; H01M 4/587; H01M 10/052;
H01M 10/0567; H01M 10/0569; Y02E 60/10

(86) International application number:
**PCT/KR2024/018389**

(87) International publication number:
**WO 2025/135528 (26.06.2025 Gazette 2025/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.12.2023 KR 20230189753
19.11.2024 KR 20240165719**

(71) Applicant: **LG Energy Solution, Ltd.
Seoul 07335 (KR)**

(72) Inventors:
• **JEONG, You Kyeong
Daejeon 34122 (KR)**
• **IM, Tae Yeong
Daejeon 34122 (KR)**
• **SUH, Soo Min
Daejeon 34122 (KR)**
• **OH, Young Ho
Daejeon 34122 (KR)**
• **AHN, Kyoung Ho
Daejeon 34122 (KR)**
• **LEE, Chul Haeng
Daejeon 34122 (KR)**

(74) Representative: **Hoffmann Eitle
Patent- und Rechtsanwälte PartmbB
Arabellastraße 30
81925 München (DE)**

(54) **LITHIUM SECONDARY BATTERY**

(57)    The present disclosure relates to a lithium secondary battery having improved high-temperature cycle characteristics, and particularly, to a lithium secondary battery including a positive electrode, a negative electrode, a separator, and an electrolyte, wherein the positive electrode includes lithium iron phosphate as a positive electrode active material, and the electrolyte includes a lithium salt; a first organic solvent; a second organic solvent; and an additive, wherein the first organic solvent is a cyclic lactone compound, the second organic solvent is a carbonate-based organic solvent, and the additive is lithium nitrate ($LiNO_3$), and satisfies following Equation 1:

[Equation 1]

$$0.0001 \leq \frac{0.02 \times (A \times B)}{(C \times D)} \leq 0.050$$

EP 4 700 894 A1

In Equation 1, A is a total amount (g) of the electrolyte injected into the lithium secondary battery, B is an amount (wt%) of the lithium nitrate ($LiNO_3$) contained in the electrolyte injected, C is a loading amount ($g/cm^2$) of the positive electrode, and D is a total area ($cm^2$) of surfaces of a positive electrode collector.

**Description**

TECHNICAL FIELD

Cross-reference to Related Applications

This application claims priority from Korean Patent Application Nos. 10-2023-0189753, filed on December 22, 2023, and 10-2024-0165719, filed on November 19, 2024, the disclosures of which are incorporated by reference herein.

Technical Field

The present disclosure relates to a lithium secondary battery, and to a lithium secondary battery having improved high-temperature cycle characteristics.

BACKGROUND ART

Recently, demand for a secondary battery having high stability as well as high capacity and high output is increasing as an application area of lithium secondary batteries is rapidly expanding not only to electricity, electronics, communication, and power supply of electronic devices such as computers, but also to power storage supply of automobiles or large-area devices such as power storage devices.

Particularly, in order to use lithium secondary batteries as a power source for electric vehicles, the lithium secondary batteries must be able to stably produce high output at high temperatures and high voltages, and, for this purpose, the use of a negative electrode active material, such as lithium metal, a carbon compound, and a silicon compound, and a high-nickel positive electrode active material with high energy density are being considered.

However, with respect to the high-nickel positive electrode active material, since output drops sharply in a low state of charge (SOC) range (e.g., SOC of 30% or less), there is a disadvantage in that a usable SOC range is greatly limited, and thus, there is a limitation in using the high-nickel positive electrode active material in fields where output characteristics are particularly important, such as electric vehicles. Furthermore, with respect to the high-nickel positive electrode active material, since stability is low, when a lithium secondary battery is operated under a high-voltage or high-temperature environment, structural degeneration may occur due to structural instability as charge and discharge proceed, or transition metal ions may be dissolved from a surface of a positive electrode while an electrode surface structure or a film formed on the surface of the positive electrode and/or negative electrode is degraded due to a side reaction with an electrolyte. As described above, since the dissolved transition metal ions degrade passivation ability of a solid electrolyte interface (SEI) while being electro-deposited on the negative electrode, there occurs a problem in that the negative electrode is degraded.

Recently, in order to solve this problem, a method of using olivine-structured lithium iron phosphate having excellent high-temperature safety, instead of the high-nickel positive electrode active material, has emerged.

However, since the lithium iron phosphate has lower theoretical capacity than the conventionally used high-nickel positive electrode active material, it is disadvantageous in that energy density is relatively lower than that of the high-nickel positive electrode active material when designing an electrode under the same conditions.

Thus, to solve such a problem, a high-loading electrode, in which an amount of an electrode active material applied per area (loading amount) is increased when using the lithium iron phosphate, has recently been attempted.

However, since the high-loading electrode not only has a high degree of application of the active material, but is also designed to increase density of the electrode, a degree of electrode compression is very large, and accordingly, there is a disadvantage in that electrolyte impregnability is reduced due to an insufficient porous structure in the electrode. If the electrolyte impregnability is reduced as described above, "charge transfer", which is a reaction between lithium ions and electrons, is reduced, and, as a result, battery resistance may be increased to degrade capacity characteristics of the battery.

Thus, there is a need to develop a new secondary battery which may improve the electrolyte impregnability during preparation of the secondary battery using the high-loading electrode and may simultaneously enhance charge mobility.

DISCLOSURE OF THE INVENTION

TECHNICAL PROBLEM

An aspect of the present disclosure provides a lithium secondary battery in which, when using a high-loading positive electrode, since electrolyte impregnability is improved and a stable film is simultaneously formed on a surface of the electrode to increase a charge transfer phenomenon by using an electrolyte, in which an amount range of a specific electrolyte additive is controlled according to a loading amount of the positive electrode, together, an increase in resistance during high-temperature storage may be suppressed and excellent cycle capacity retention may be secured.

TECHNICAL SOLUTION

[1] The present disclosure provides a lithium secondary battery including a positive electrode, a negative electrode, a separator, and an electrolyte, wherein the positive electrode includes lithium iron phosphate as a positive electrode active material, and the electrolyte includes a lithium salt; a first organic solvent; a second organic solvent; and an additive, wherein the first organic solvent is a cyclic lactone compound, the second organic solvent is a carbonate-based organic solvent, and the additive is lithium nitrate ($LiNO_3$), and satisfies following Equation 1.

$$[\text{Equation 1}]$$

$$0.0001 \leq \frac{0.02 \times (A \times B)}{(C \times D)} \leq 0.050$$

In Equation 1,

A is a total amount (g) of the electrolyte injected into the lithium secondary battery,
B is an amount (wt%) of the lithium nitrate ($LiNO_3$) contained in the electrolyte injected,
C is a loading amount ($g/cm^2$) of the positive electrode, and
D is a total area ($cm^2$) of surfaces of a positive electrode collector.

[2] The present disclosure provides the lithium secondary battery of [1] above, wherein the lithium iron phosphate includes a compound represented by Formula 1: **[0022]**

[Formula 1]  $Li_{1+a}Fe_xM_y(PO_{4-b})X'_b$

In [Formula 1], M is any one selected from the group consisting of aluminum (Al), magnesium (Mg), nickel (Ni), cobalt (Co), manganese (Mn), titanium (Ti), gallium (Ga), copper (Cu), vanadium (V), niobium (Nb), zirconium (Zr), cerium (Ce), indium (In), zinc (Zn), and yttrium (Y), X' is at least one element selected from the group consisting of fluorine (F), sulfur (S), and nitrogen (N), and $-0.5 \leq a \leq 0.5$, $0 < x \leq 1$, $0 \leq y \leq 1$, and $0 \leq b \leq 0.3$.
[3] The present disclosure provides the lithium secondary battery of [1] or [2] above, wherein the lithium iron phosphate is lithium iron phosphate ($LiFePO_4$) or lithium manganese iron phosphate ($LiFeMnPO_4$).
[4] The present disclosure provides the lithium secondary battery of at least one of [1] to [3] above, wherein the cyclic lactone compound includes gamma-butyrolactone.
[5] The present disclosure provides the lithium secondary battery of at least one of [1] to [4] above, wherein the carbonate-based organic solvent is a cyclic carbonate-based organic solvent.
[6] The present disclosure provides the lithium secondary battery of at least one of [1] to [5] above, wherein the first organic solvent and the second organic solvent are present in a volume ratio of 50:50 to 99:1.
[7] The present disclosure provides the lithium secondary battery of at least one of [1] to [6] above, wherein, in Equation 1, A is in a range of 3.0 g to 8.5 g.
[8] The present disclosure provides the lithium secondary battery of at least one of [1] to [7] above, wherein, in Equation 1, C is in a range of 0.032 $g/cm^2$ to 0.064 $g/cm^2$.
[9] The present disclosure provides the lithium secondary battery of at least one of [1] to [8] above, wherein, in Equation 1, D is in a range of 310 $cm^2$ to 450 $cm^2$.
[10] The present disclosure provides the lithium secondary battery of at least one of [1] to [9] above, wherein the negative electrode includes a carbon-based active material, a silicon-based active material, or a mixture of the carbon-based active material and the silicon-based active material.
[11] The present disclosure provides the lithium secondary battery of at least one of [1] to [10] above, wherein a capacity of the lithium secondary battery is in a range of 1,000 mAh to 3,000 mAh.

ADVANTAGEOUS EFFECTS

Since a lithium secondary battery according to the present disclosure uses an electrolyte which includes an organic solvent containing a cyclic lactone compound, as a main solvent, and lithium nitrate ($LiNO_3$), in which an amount range is controlled according to a loading amount of a positive electrode, as an additive, it may improve charge mobility on a surface of the high-loading positive electrode by improving electrolyte impregnability for the high-loading positive electrode and forming a film having low resistance on the surface of the high-loading positive electrode at the same time. Thus, cycle characteristics and high-temperature storage characteristics of the lithium secondary battery of the present disclosure may be improved.

MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

For example, it will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

Also, the expressions "a" and "b" in the description of "a to b carbon atoms" in the present specification each denote the number of carbon atoms included in a specific functional group. That is, the functional group may include "a" to "b" carbon atoms. For example, the expression "alkylene group having 1 to 5 carbon atoms" denotes an alkylene group including 1 to 5 carbon atoms, that is, $-CH_2-$, $-CH_2CH_2-$, $-CH_2CH_2CH_2-$, $-CH_2(CH_2)CH-$, $-CH_2CH_2CH_2CH_2CH_2-$, and $-CH(CH_2)CH_2CH_2-$.

Furthermore, in this specification, the expression "alkylene group" denotes a branched or unbranched aliphatic hydrocarbon group or a functional group in which one hydrogen atom is removed from carbon atoms located at both ends of the aliphatic hydrocarbon group. In an embodiment, the alkylene group may be substituted or unsubstituted. The alkylene group may include a methylene group, an ethylene group, a propylene group, an isopropylene group, a butylene group, an isobutylene group, a tert-butylene group, a pentylene group, and 3-pentylene group, but is not limited thereto, and each of them may be optionally substituted in another embodiment.

Also, unless otherwise defined in the specification, the expression "substitution" denotes that at least one hydrogen bonded to carbon is substituted with another element such as fluorine.

Furthermore, a "loading amount" in this specification means an amount of an active material per unit area of a positive electrode active material layer including lithium iron phosphate which is formed on a current collector, wherein it is expressed as "$g/cm^2$". In this case, a "loading amount of a positive electrode" in this specification means a total sum of loading amounts of both surfaces of the positive electrode.

Hereinafter, the present disclosure will be described in detail.

A lithium secondary battery according to the present disclosure includes at least one of configurations disclosed below, and may include any combination between technically possible configurations among the configurations below.

Lithium Secondary Battery

The present disclosure relates to a lithium secondary battery.

Specifically, the present disclosure provides a lithium secondary battery including a positive electrode, a negative electrode, and an electrolyte.

The positive electrode may include lithium iron phosphate as a positive electrode active material.

The electrolyte may include a lithium salt; a first organic solvent; a second organic solvent; and an additive.

The first organic solvent may include a cyclic lactone compound.

The second organic solvent may include a carbonate-based organic solvent.

The additive is lithium nitrate ($LiNO_3$) and satisfies following Equation 1.

[Equation 1]

$$0.0001 \leq \frac{0.02 \times (A \times B)}{(C \times D)} \leq 0.050$$

In Equation 1,

A is a total amount (g) of the electrolyte injected into the lithium secondary battery,
B is an amount (wt%) of the lithium nitrate ($LiNO_3$) contained in the electrolyte injected,
C is a loading amount ($g/cm^2$) of the positive electrode, and
D is a total area ($cm^2$) of surfaces of a positive electrode collector.

Hereinafter, each component of the lithium secondary battery of the present disclosure will be described in detail.

(1) Positive Electrode

The positive electrode of the present disclosure may include lithium iron phosphate as a positive electrode active material, and the lithium iron phosphate may be represented by Formula 1 below.

[Formula 1]       $Li_{1+a}Fe_xM_y(PO_{4-b})X'_b$

In [Formula 1],

M is any one selected from the group consisting of aluminum (Al), magnesium (Mg), nickel (Ni), cobalt (Co), manganese (Mn), titanium (Ti), gallium (Ga), copper (Cu), vanadium (V), niobium (Nb), zirconium (Zr), cerium (Ce), indium (In), zinc (Zn), and yttrium (Y),
X' is at least one element selected from the group consisting of fluorine (F), sulfur (S), and nitrogen (N), and
$-0.5 \leq a \leq 0.5$, $0 < x \leq 1$, $0 \leq y \leq 1$, and $0 \leq b \leq 0.3$.

As a representative example, the lithium iron phosphate represented by Formula 1 may include lithium iron phosphate ($LiFePO_4$, LFP) or lithium manganese iron phosphate ($LiFeMnPO_4$, LFMP).

As the lithium iron phosphate represented by Formula 1, primary particles with a nanometer size may be used for high input/output of lithium ions, and a secondary particle, as an aggregate of the primary particles, may be prepared by assembling these primary particles and may also be used. For example, in a case in which the primary particles are used as the lithium iron phosphate, a particle size may be in a range of 50 nm to 2,000 nm, more specifically, 200 nm to 1,100 nm. Also, in a case in which the secondary particle, as the aggregate of the primary particles, is prepared by assembling these primary particles and is used, an average particle diameter (D50) of the secondary particle may be in a range of 0.5 $\mu$m to 30 $\mu$m.

The lithium iron phosphate represented by Formula 1 may secure structural stability and thermal stability even during volume changes due to charge and discharge because phosphorus and oxygen form strong covalent bonds in a tetrahedral structure of $PO_4$. Also, the lithium iron phosphate represented by Formula 1 may have an amorphous layer of carbon or metal oxide which is coated on its surface. In this case, since the amorphous layer of carbon or metal oxide, which is coated on the surface, is not crystalline, lithium ions are intercalated/deintercalated into/from the lithium iron phosphate of a core portion through the amorphous layer of a shell. Since the amorphous layer of carbon or metal oxide, which is coated on the surface, has excellent electronic conductivity while allowing the lithium ions to pass therethrough, it may also act as a current path to the lithium iron phosphate core that is an active material, and thus, high-rate charge and discharge may be possible. Furthermore, safety may be further increased because an unnecessary reaction between the core material and an electrolyte solution may be controlled when the surface of the lithium iron phosphate is coated with the amorphous layer of carbon or metal oxide.

In order to design a high-capacity electrode in the present disclosure, a loading amount of the positive electrode may be 0.032 $g/cm^2$ or more (loading amount of the positive electrode based on single surface: 0.016 $g/cm^2$ or more), may specifically be in a range of 0.032 $g/cm^2$ to 0.064 $g/cm^2$, and may more preferably be in a range of 0.040 $g/cm^2$ to 0.060 $g/cm^2$. In a case in which the loading amount of the positive electrode active material satisfies the above range, design of a high energy density battery may be possible.

The positive electrode of the present disclosure may include a positive electrode collector; and a positive electrode material mixture layer disposed on at least one surface of the positive electrode collector. In this case, the positive electrode material mixture layer may include the above-described lithium iron phosphate as the positive electrode active material.

The positive electrode collector may typically have a thickness of 3 $\mu$m to 500 $\mu$m.

Microscopic irregularities may be formed on the surface of the positive electrode collector to improve adhesion of the positive electrode active material. For example, the positive electrode collector may be used in various shapes such as that of a film, a sheet, a foil, a net, a porous body, a foam body, a non-woven fabric body, and the like.

The positive electrode material mixture layer is disposed on at least one surface of the positive electrode collector. Specifically, the positive electrode material mixture layer may be disposed on one surface or both surfaces of the positive electrode collector.

Also, the lithium iron phosphate represented by Formula 1 may be included in an amount of 80 wt% to 99 wt% in the positive electrode material mixture layer in consideration of exhibiting sufficient capacity.

Furthermore, porosity of the positive electrode material mixture layer, which is measured by a Brunauer-Emmett-Teller (BET) method, may be in a range of 20% to 40%, and may specifically be in a range of 20% to 30%.

In a case in which the porosity of the positive electrode material mixture layer satisfies the above range, a high-density electrode is obtained while interfacial resistance of the positive electrode may be decreased to improve output characteristics of the battery.

The positive electrode material mixture layer may further include a binder and/or a conductive agent together with the above-described positive electrode active material.

The binder improves adhesion between positive electrode active material particles and adhesion between the positive electrode active material and the current collector. As an example of the binder, any one of a fluorine resin-based binder such as polyvinylidene fluoride (PVDF); a rubber-based binder including a styrene butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimidazole-based binder; a polyester-based binder; and a silane-based binder, or a mixture of two or more thereof may be used.

The binder may be included in an amount of 0.1 wt% to 15 wt%, preferably, 0.1 wt% to 10 wt% in the positive electrode material mixture layer.

Next, the conductive agent is used to provide conductivity to the electrode, wherein any conductive agent may be used without particular limitation as long as it has electron conductivity without causing chemical changes in the battery. As a specific example of the conductive agent, carbon black such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, and nickel powder; conductive whiskers such as zinc oxide whiskers and potassium titanate whiskers; conductive metal oxide such as titanium oxide; or polyphenylene derivatives may be used.

The conductive agent may be added in an amount of 1 wt% to 30 wt% in the positive electrode material mixture layer.

The positive electrode may be prepared by coating the positive electrode collector with a positive electrode slurry including the positive electrode active material as well as optionally the binder, the conductive agent, and a solvent for forming a positive electrode slurry and then drying and rolling the coated positive electrode collector. Also, the positive electrode may be prepared by mixing the positive electrode active material with optionally the binder and the conductive agent to prepare a film and then laminating the film on the positive electrode collector.

Porosity of the positive electrode material mixture layer after rolling, which is measured by a BET method, may be in a range of 20% to 40%, and may specifically be in a range of 20% to 30%.

The solvent for forming a positive electrode slurry, for example, may include at least one selected from distilled water, N-methyl pyrrolidone, ethanol, methanol, or isopropyl alcohol, and may preferably include N-methyl pyrrolidone, in terms of facilitating dispersion of the positive electrode active material, the binder, and/or the conductive agent.

(2) Negative Electrode

Next, the negative electrode will be described.

The negative electrode may include a negative electrode active material.

A carbon-based active material, a silicon-based active material, or a mixture of the carbon-based active material and the silicon-based active material may be used as the negative electrode active material.

As the carbon-based active material, various carbon-based active materials used in the art, for example, graphite-based materials such as natural graphite, artificial graphite, and Kish graphite; pyrolytic carbon, mesophase pitch based carbon fiber, meso-carbon microbeads, mesophase pitches, high-temperature sintered carbon such as petroleum or coal tar pitch derived cokes, soft carbon, and hard carbon may be used. A shape of the carbon-based active material is not particularly limited, and materials of various shapes, such as an irregular shape, planar shape, flaky shape, spherical shape, or fibrous shape, may be used.

Specifically, any one of natural graphite or artificial graphite may be used as the carbon-based active material, and natural graphite and artificial graphite may be used together to suppress exfoliation of the active material by increasing adhesion to a current collector.

Also, the silicon-based active material, for example, may include at least one selected from metal silicon (Si), silicon oxide ($SiO_x$, where 0<x<2), silicon carbide (SiC), or a Si-Y alloy (where Y is an element selected from alkali metal, alkaline earth metal, a Group 13 element, a Group 14 element, transition metal, a rare earth element, or a combination thereof, and is not Si). The element Y may be selected from the group consisting of Mg, calcium (Ca), strontium (Sr), barium (Ba), radium (Ra), scandium (Sc), Y, Ti, Zr, hafnium (Hf), rutherfordium (Rf), V, Nb, tantalum (Ta), dubnium (Db), chromium (Cr), molybdenum (Mo), tungsten (W), seaborgium (Sg), technetium (Tc), rhenium (Re), bohrium (Bh), iron (Fe), lead (Pb), ruthenium (Ru), osmium (Os), hassium (Hs), rhodium (Rh), iridium (Ir), palladium (Pd), platinum (Pt), Cu, silver (Ag), gold (Au), Zn, cadmium (Cd), boron (B), Al, Ga, tin (Sn), In, Ti, germanium (Ge), phosphorus (P), arsenic (As), antimony (Sb), bismuth (Bi), S, selenium (Se), tellurium (Te), polonium (Po), and a combination thereof.

An average particle diameter ($D_{50}$) of the silicon-based active material may be in a range of 1 $\mu$m to 30 $\mu$m, preferably, 2 $\mu$m to 15 $\mu$m in terms of ensuring the structural stability during charge and discharge and reducing a side reaction with the electrolyte solution.

Also, the negative electrode of the present disclosure may include at least one selected from the carbon-based active material and the silicon-based active material.

Specifically, the negative electrode of the present disclosure may include the carbon-based active material and the silicon-based active material.

In this case, a weight ratio of the silicon-based active material to the carbon-based active material may be in a range of 1:99 to 30:70, specifically, 3:97 to 15:85. In a case in which the mixing ratio of the silicon-based active material to the carbon-based active material satisfies the above range, since volume expansion of the silicon-based active material is suppressed while capacity characteristics are improved, excellent cycle performance may be ensured.

The negative electrode may include a negative electrode collector; and a negative electrode material mixture layer disposed on at least one surface of the negative electrode collector. In this case, the negative electrode active material may be included in the negative electrode material mixture layer.

The negative electrode collector is not particularly limited as long as it has high conductivity without causing chemical changes in the battery. Specifically, copper, stainless steel, aluminum, nickel, titanium, fired carbon, copper or stainless steel that is surface-treated with one of carbon, nickel, titanium, silver, or the like, and an aluminum-cadmium alloy may be used as the negative electrode collector.

The negative electrode collector may typically have a thickness of 3 $\mu$m to 500 $\mu$m.

Microscopic irregularities may be formed on the surface of the negative electrode collector to improve adhesion of the negative electrode active material. For example, the negative electrode collector may be used in various shapes such as that of a film, a sheet, a foil, a net, a porous body, a foam body, a non-woven fabric body, and the like.

The negative electrode material mixture layer is disposed on at least one surface of the negative electrode collector. Specifically, the negative electrode material mixture layer may be disposed on one surface or both surfaces of the negative electrode collector.

The negative electrode active material may be included in an amount of 60 wt% to 99 wt% in the negative electrode material mixture layer in terms of sufficiently exhibiting the capacity in the secondary battery while minimizing an effect of volume expansion/contraction on the battery.

Also, porosity of the negative electrode material mixture layer, which is measured by a BET method, may be in a range of 20% to 40%, and may specifically be in a range of 20% to 30%.

In a case in which the porosity of the negative electrode material mixture layer satisfies the above range, interfacial resistance of the negative electrode may be decreased to improve the output characteristics of the battery.

The negative electrode material mixture layer may further include a conductive agent and/or a binder together with the negative electrode active material.

The conductive agent is a component for further improving conductivity of the negative electrode active material, wherein it is not particularly limited as long as it has conductivity without causing chemical changes in the battery, and, for example, a conductive material, such as: carbon black such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The conductive agent may be added in an amount of 10 wt% or less, preferably, 5 wt% or less in the negative electrode material mixture layer.

The binder is a component that assists in binding between the conductive agent, the active material, and the current collector, wherein the binder may typically include a fluorine resin-based binder such as polyvinylidene fluoride (PVDF); a rubber-based binder including a styrene butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimidazole-based binder; a polyester-based binder; and a silane-based binder.

The binder may be included in an amount of 0.1 wt% to 15 wt%, preferably, 0.1 wt% to 10 wt% in the negative electrode material mixture layer.

The negative electrode may be prepared by coating the negative electrode collector with a negative electrode slurry including the negative electrode active material as well as optionally the binder, the conductive agent, and a solvent for forming a negative electrode slurry and then drying and rolling the coated negative electrode collector. Also, the negative electrode may be prepared by mixing the negative electrode active material with optionally the binder and the conductive agent to prepare a film and then laminating the film on the negative electrode collector.

Porosity of the negative electrode material mixture layer after rolling, which is measured by a BET method, may be in a range of 20% to 40%, and may specifically be in a range of 20% to 30%.

The solvent for forming a negative electrode slurry, for example, may include at least one selected from distilled water, N-methyl pyrrolidone, ethanol, methanol, or isopropyl alcohol, and may preferably include distilled water, in terms of facilitating dispersion of the negative electrode active material, the binder, and/or the conductive agent.

(3) Separator

The separator separates the negative electrode and the positive electrode and provides a movement path of lithium ions, wherein any separator may be used as the separator without particular limitation as long as it is typically used in a lithium secondary battery, and particularly, a separator having high moisture-retention ability for a non-aqueous electrolyte as well as low resistance to the transfer of non-aqueous electrolyte ions may be used.

Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used as the separator. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

(4) Electrolyte

Next, the electrolyte of the present disclosure may include a lithium salt; a first organic solvent; a second organic solvent; and an additive, and specific examples of each component are as described below.

(4-1) Lithium Salt

First, lithium salts commonly used in an electrolyte for a lithium secondary battery may be used as the lithium salt without limitation, and, for example, the lithium salt may include $Li^+$ as a cation, and may include any one selected from $F^-$, $Cl^-$, $Br^-$, $I^-$, $N(CN)_2^-$, $BF_4^-$, $ClO_4^-$, $B_{10}Cl_{10}^-$, $AlCl_4^-$, $AlO_2^-$, $PF6^-$, $CF_3SO_3^-$, $CH_3CO_2^-$, $CF_3CO_2^-$, $AsF_6^-$, $SbF_6^-$, $CH_3SO_3^-$, $(CF_3CF_2SO_2)_2N^-$, $(CF_3SO_2)_2N^-$, $(FSO_2)_2N^-$, $BF_2C_2O_4^-$, $BC_4O_8^-$, $PF_4C_2O_4^-$, $PF_2C_4O_3^-$, $(CF_3)_2PF_4^-$, $(CF_3)_3PF_3^-$, $(CF_3)_4PF_2^-$, $(CF_3)_5PF^-$, $(CF_3)_6P^-$, $C_4F_9SO_3^-$, $CF_3CF_2SO_3^-$, $CF_3CF_2(CF_3)_2CO^-$, $(CF_3SO_2)_2CH^-$, $CF_3(CF_2)_7SO_3^-$, or $SCN^-$ as an anion.

Specifically, the lithium salt may include a single material selected from $LiCl$, $LiBr$, $LiI$, $LiBF_4$, $LiClO_4$, $LiB_{10}Cl_{10}$, $LiAlCl_4$, $LiAlO_2$, $LiPF_6$, $LiCF_3SO_3$, $LiCH_3CO_2$, $LiCF_3CO_2$, $LiAsF_6$, $LiSbF_6$, $LiCH_3SO_3$, $LiN(SO_2F)_2$ (Lithium bis (fluorosulfonyl) imide, LiFSI), $LiN(SO_2CF_2CF_3)_2$ (lithium bis(pentafluoroethanesulfonyl)imide, LiBETI), or $LiN(SO_2CF_3)_2$ (lithium bis(trifluoromethane sulfonyl)imide, LiTFSI), or a mixture of two or more thereof, and may specifically include at least one selected from $LiBF_4$, $LiPF_6$, $LiN(SO_2F)_2$ (Lithium bis (fluorosulfonyl) imide, LiFSI), $LiN(SO_2CF_2CF_3)_2$ (lithium bis(pentafluoroethanesulfonyl)imide, LiBETI), or $LiN(SO_2CF_3)_2$ (lithium bis(trifluoromethane sulfonyl)imide, LiTFSI). In addition to these materials, a lithium salt typically used in an electrolyte for a lithium secondary battery may be used without limitation.

The lithium salt may be appropriately changed in a normally usable range, but may be included in a concentration of 0.8 M to 3.0 M, specifically 1.0 M to 2.0 M, and preferably 1.0 M to 1.8 M in the electrolyte to obtain an optimum effect of forming a film for preventing corrosion of a surface of the electrode.

In a case in which the concentration of the lithium salt is within the above range, viscosity of the electrolyte may be controlled to achieve optimal impregnability, and an effect of improving capacity characteristics and cycle characteristics of the lithium secondary battery may be obtained by improving mobility of lithium ions.

(4-2) First Organic Solvent

Next, the first organic solvent will be described.

The first organic solvent may include a cyclic lactone compound.

The cyclic lactone compound is a compound having high permittivity and ionic conductivity, wherein it may improve a charge transfer degradation phenomenon occurring when operating a high-loading electrode.

The cyclic lactone compound may include gamma-butyrolactone.

The first organic solvent may be included in an amount of 39 wt% to 80 wt% based on a total weight of the electrolyte, may specifically be included in an amount of 48 wt% to 80 wt%, and may more preferably be included in an amount of 52 wt% to 70 wt%.

In a case in which the amount of the first organic solvent of the present disclosure satisfies the above range, an effect of reducing battery resistance may be achieved by improving lithium ion transfer characteristics.

(4-3) Second Organic Solvent

Next, the second organic solvent will be described.

The second organic solvent may include a carbonate organic solvent such that decomposition due to an oxidation reaction during charge and discharge of the secondary battery may be minimized and desired properties may be exhibited together with an additive.

Specifically, the carbonate organic solvent preferably includes any one selected from a cyclic carbonate-based organic solvent having high ionic conductivity and high permittivity or a linear carbonate-based organic solvent having low viscosity and low permittivity, and may specifically include a cyclic carbonate-based organic solvent.

The cyclic carbonate-based organic solvent may specifically include any one organic solvent selected from ethylene carbonate (EC), propylene carbonate (PC), 1,2-butylene carbonate, 2,3-butylene carbonate, 1,2-pentylene carbonate, 2,3-pentylene carbonate, vinylene carbonate, or fluoroethylene carbonate (FEC), or two or more thereof, and among them, the cyclic carbonate-based organic solvent may include ethylene carbonate which may maintain stable passivation ability of a solid electrolyte interface (SEI) layer.

The linear carbonate-based organic solvent may include any one organic solvent selected from dimethyl carbonate (DMC), diethyl carbonate (DEC), dipropyl carbonate, ethyl methyl carbonate (EMC), methylpropyl carbonate, or ethylpropyl carbonate, or two or more thereof, and among them, the linear carbonate-based organic solvent may include dimethyl carbonate (DMC) with low viscosity characteristics as well as a small molecular size among the linear carbonate-based organic solvents.

Specifically, the second organic solvent may be ethylene carbonate, propylene carbonate, or a mixed solvent thereof.

In a case in which the cyclic carbonate and the linear carbonate are mixed and used as the second organic solvent, the cyclic carbonate organic solvent and the linear carbonate organic solvent may be mixed in a volume ratio of about 1:99 to 50:50 and used, or may be mixed in a volume ratio of 20:80 to 40:60 and used in order to secure low viscosity characteristics.

The electrolyte of the present disclosure may additionally include a linear ester-based organic solvent as a third organic solvent, if necessary.

As a representative example, the linear ester-based organic solvent may include at least one organic solvent selected from methyl acetate, ethyl acetate, propyl acetate, methyl propionate, ethyl propionate, propyl propionate, or butyl propionate, and may specifically include at least one of methyl acetate and ethyl acetate.

In the electrolyte of the present disclosure, the first organic solvent and the second organic solvent may be included in a volume ratio of 50:50 to 99:1, and may specifically be included in a volume ratio of 70:30 to 99:1.

In a case in which the mixing ratio of the first organic solvent to the second organic solvent satisfies the above range, a high effect of ion transfer characteristics may be achieved and battery performance with low resistance characteristics may be secured. That is, in a case in which the volume ratio of the first organic solvent is 50 or more, the effect of ion transfer characteristics may be secured, and in a case in which the volume ratio is 99 or less, a stable film may be formed to improve battery life characteristics.

(4-4) Additive

Also, the electrolyte of the present disclosure may include lithium nitrate ($LiNO_3$) as an additive.

The lithium nitrate ($LiNO_3$) included as the additive may form an inorganic film including lithium-nitrogen and lithium-oxygen bonds on a surface of the negative electrode during a formation step. Since the inorganic film increases surface energy and acts as an ion transporter capable of uniformly transporting lithium ions, it may improve impregnability of the electrode with the electrolyte and may induce a more effective charge transfer reaction.

Furthermore, since the lithium nitrate ($LiNO_3$) included as the additive may suppress electrodeposition of transition metal ions on the surface of the negative electrode by forming a coordination bond with a transition metal dissolved from the positive electrode under a high-temperature environment, or forming a coordination bond with a Lewis acid generated by a decomposition product of the lithium salt, it may prevent reversible lithium loss, and thus, degradation of the cycle characteristics may be improved.

An amount (wt%) of the lithium nitrate ($LiNO_3$) as the additive may vary depending on the loading amount of the positive electrode, and, for example, preferably satisfies Equation 1 below.

$$[\text{Equation 1}]$$

$$0.0001 \leq \frac{0.02 \times (A \times B)}{(C \times D)} \leq 0.050$$

In Equation 1,

A is a total amount (g) of the electrolyte injected into the lithium secondary battery,
B is the amount (wt%) of the lithium nitrate ($LiNO_3$) contained in the electrolyte injected,
C is the loading amount (g/cm$^2$) of the positive electrode, and
D is a total area (cm$^2$) of the surfaces of the positive electrode collector.

Specifically, in Equation 1, A may be in a range of 3.0 g to 8.5 g. In a case in which A is 3.0 g or more, impregnability of the electrode assembly with the electrolyte may be easily controlled, and, in a case in which A is 8.5 g or less, electrolyte impregnability may be improved and an increase in thickness of the battery may be prevented by controlling an amount of gas generated in a cell during battery operation.

Also, in order to design a high-capacity electrode, in Equation 1, C may be in a range of 0.032 g/cm$^2$ to 0.064 g/cm$^2$.

Furthermore, in Equation 1, D represents the total area of both surfaces of the positive electrode collector coated with the positive electrode active material, wherein it may specifically be in a range of 310 cm$^2$ to 450 cm$^2$ such that it may be applied to a small battery.

The 0.02 is a constant, wherein it is a value determined by multiplying 0.01, a value for expressing a percentage of the amount of the additive in the electrolyte as a decimal, by 2, an integer value for converting the loading amount of the positive electrode of B into a single-surface loading amount.

In a case in which the amount (wt%) of the lithium nitrate ($LiNO_3$), as the additive in the electrolyte of the present disclosure, satisfies Equation 1, since the electrolyte impregnability for the electrode may be increased and the inorganic film including lithium-nitrogen and lithium-oxygen bonds, which may improve ion transfer characteristics, may be uniformly formed on the surface of the negative electrode, excellent battery performance may be ensured. That is, in a case in which a value of Equation 1 satisfies 0.0001 or more, or 0.0005 or more, preferably, 0.001 or more, since the film, which does not operate as a resistor, but may operate as an effective ion transporter, is uniformly formed to suppress an increase in battery resistance, occurrence of degradation of battery performance may be prevented and degradation of life performance at low temperatures (sub-zero temperatures) may be prevented. Also, in a case in which the value of Equation 1 satisfies 0.050 or less, or 0.040 or less, preferably, 0.030 or less, since generation of unnecessary activation gas may be prevented by suppressing the side reaction, degradation of high-temperature cycle and high-temperature storage characteristics may be prevented.

(4-5) Other Additives

The lithium secondary battery of the present disclosure may further include other additives in the electrolyte, if necessary, in order to prevent the occurrence of collapse of the negative electrode due to decomposition of the electrolyte in a high output environment or to further improve low-temperature high rate discharge characteristics, high-temperature stability, overcharge prevention, and an effect of suppressing battery swelling at high temperature. In a case in which other additives are further included in the electrolyte of the present disclosure, the lithium nitrate ($LiNO_3$) may be named as a first additive, and the other additives may be named as a second additive.

Typical examples of the other additives may include any one additive selected from a cyclic carbonate-based compound, a sulfate-based compound, a sultone-based compound, a phosphate-based compound, a borate-based compound, a nitrile-based compound, a benzene-based compound, an amine-based compound, a silane-based compound, or a lithium salt-based compound.

Specifically, the cyclic carbonate-based compound may include vinylene carbonate (VC).

The sulfate-based compound may include ethylene sulfate (Esa), trimethylene sulfate (TMS), or methyl trimethylene sulfate (MTMS).

The sultone-based compound may include any one compound selected from 1,3-propane sultone (PS), 1,4-butane sultone, ethane sultone, 1,3-propene sultone (PRS), 1,4-butene sultone, or 1-methyl-1,3-propene sultone.

The phosphate-based compound may include at least one compound selected from lithium difluoro(bisoxalato) phosphate, lithium difluorophosphate, tris(trimethyl silyl)phosphate, tris(2,2,2-trifluoroethyl)phosphate, or tris(trifluoroethyl)phosphate.

The borate-based compound may include tetraphenylborate and lithium oxalyldifluoroborate.

The nitrile-based compound may include any one compound selected from succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, or 4-fluorophenylacetonitrile.

The benzene-based compound may include fluorobenzene, the amine-based compound may include triethanolamine or ethylenediamine, and the silane-based compound may include tetravinylsilane.

The lithium salt-based compound is a compound different from the lithium salt included in the electrolyte, wherein the lithium salt-based compound may include at least one compound selected from $LiPO_2F_2$, LiODFB, LiBOB (lithium bisoxalate borate ($LiB(C_2O_4)_2$), $LiBF_4$, or LiDFOP.

Two or more other additives may be mixed and used, and the other additives may be included in an amount of less than 10 wt%, particularly 0.01 wt% to less than 8.0 wt%, and preferably 0.05 wt% to 5.0 wt% based on the total weight of the electrolyte.

Preferably, in the electrolyte of the present disclosure, the lithium nitrate ($LiNO_3$), as the additive, and the other additives may be included in a weight ratio of 1:0.01 to 1:50, may be included in a weight ratio of 1:0.1 to 1:10, and may more preferably be included in a weight ratio of 1:0.1 to 1:6.

In a case in which the additive and the other additives are included within the above range in the electrolyte of the present disclosure, a stable film may be formed simultaneously on the surfaces of the positive electrode and the negative electrode. That is, in a case in which the other additives are present in a weight ratio of 50 or less, a uniform film may be formed on the surface of the negative electrode to prevent it from acting as a resistor, and since electrodeposition of a metallic material on the negative electrode may be inhibited by suppressing the dissolution of the transition metals, an increase in film thickness and an increase in resistance may be prevented. In a case in which a relatively large amount of the other additives is included, the film thickness increases due to the increase in the amount of the other additives reductively decomposed on the surface of the negative electrode, and, as a result, since the additives do not effectively operate, but act as a resistor, cell performance may be significantly degraded.

A shape of the lithium secondary battery of the present disclosure is not particularly limited, but a cylindrical type, a prismatic type, a pouch type, or a coin type may be used.

Also, the lithium secondary battery of the present disclosure may be suitably used for portable devices, such as mobile phones, notebook computers, and digital cameras, and electric cars such as hybrid electric vehicles (HEVs).

Furthermore, the lithium secondary battery according to the present disclosure may not only be used in a battery cell that is used as a power source of a small device, but may also be used as a unit cell in a medium and large sized battery module including a plurality of battery cells. Specifically, the lithium secondary battery of the present disclosure may be used in a battery cell for a small device having a capacity of 1,000 mAh to 3,000 mAh and a volume of width (33 mm to 39 mm) × length (80 mm to 96 mm) × thickness (3.0 mm to 5.0 mm).

Hereinafter, the present disclosure will be described in detail, according to specific examples. The invention may, however, be embodied in many different forms and should not be construed as being limited to the embodiments set forth herein. Rather, these example embodiments are provided so that this description will be thorough and complete, and will fully convey the scope of the present disclosure to those skilled in the art.

[Examples]

Example 1.

(Positive Electrode Preparation)

A positive electrode active material ($LiFePO_4$), a conductive agent (carbon black), and a binder (polyvinylidene fluoride, PVDF) were added in a weight ratio of 96:1:3 to N-methyl-2-pyrrolidone (NMP), as a solvent, to prepare a positive electrode active material slurry (solid content 67 wt%). A 15 $\mu$m thick positive electrode collector (Al thin film, total area of surfaces of the positive electrode collector: 435 cm$^2$) was coated with the positive electrode active material slurry, dried, and roll-pressed to prepare a positive electrode (loading amount of the positive electrode: 0.048 mg/cm$^2$, loading amount base on single surface of the positive electrode: 0.024 mg/cm$^2$, porosity of the positive electrode material mixture layer: 24%).

(Negative Electrode Preparation)

A negative electrode active material (artificial graphite 100%), CMC-SBR as a binder, and carbon black as a conductive agent were added to distilled water, as a solvent, in a weight ratio of 96:3.5:0.5 to prepare a negative electrode active material slurry (solid content 53 wt%). An 8 $\mu$m thick negative electrode collector (Cu thin film) was coated with the negative electrode active material slurry, dried, and roll-pressed to prepare a negative electrode (porosity of the negative electrode material mixture layer: 26%).

(Electrolyte Preparation)

LiPF$_6$ was dissolved in an organic solvent, in which gamma-butyrolactone and ethylene carbonate were mixed in a volume ratio of 70:30, such that a concentration of the LiPF$_6$ was 1.0 M, and 1.0 wt% of lithium nitrate (LiNO$_3$) was then added to prepare an electrolyte for a lithium secondary battery of the present disclosure.

(Secondary Battery Preparation)

An electrode assembly was prepared by a conventional method of sequentially stacking the positive electrode and the negative electrode, which had been prepared by the above-described method, together with a polyethylene porous film, and was then accommodated in a pouch type secondary battery case, and 3.65 g of the above-prepared electrolyte for a lithium secondary battery was injected to prepare a lithium secondary battery (see Table 1 below).

Example 2.

(Electrolyte Preparation)

LiPF$_6$ was dissolved in an organic solvent, in which gamma-butyrolactone and ethylene carbonate were mixed in a volume ratio of 70:30, such that a concentration of the LiPF$_6$ was 1.0 M, and 1.0 wt% of lithium nitrate (LiNO$_3$) was then added to prepare an electrolyte for a lithium secondary battery of the present disclosure.

(Secondary Battery Preparation)

A lithium secondary battery was prepared in the same manner as in Example 1 except that 4.98 g of the above-prepared electrolyte for a lithium secondary battery was injected (see Table 1 below).

Example 3.

(Electrolyte Preparation)

LiPF$_6$ was dissolved in an organic solvent, in which gamma-butyrolactone and ethylene carbonate were mixed in a volume ratio of 70:30, such that a concentration of the LiPF$_6$ was 1.0 M, and 1.0 wt% of lithium nitrate (LiNO$_3$) was then added to prepare an electrolyte for a lithium secondary battery of the present disclosure.

(Secondary Battery Preparation)

A lithium secondary battery was prepared in the same manner as in Example 1 except that 6.64 g of the above-prepared electrolyte for a lithium secondary battery was injected (see Table 1 below).

Example 4.

(Positive Electrode Preparation)

A positive electrode active material (LiFePO$_4$), a conductive agent (carbon black), and a binder (polyvinylidene fluoride, PVDF) were added in a weight ratio of 96:1:3 to N-methyl-2-pyrrolidone (NMP), as a solvent, to prepare a positive electrode active material slurry (solid content 67 wt%). A 15 $\mu$m thick positive electrode collector (Al thin film, total area of surfaces of the positive electrode collector: 435 $cm^2$) was coated with the positive electrode active material slurry, dried, and roll-pressed to prepare a positive electrode (loading amount of the positive electrode: 0.064 $mg/cm^2$, loading amount base on single surface of the positive electrode: 0.032 $mg/cm^2$, porosity of the positive electrode material mixture layer: 24%).

(Electrolyte Preparation)

$LiPF_6$ was dissolved in an organic solvent, in which gamma-butyrolactone and ethylene carbonate were mixed in a volume ratio of 70:30, such that a concentration of the $LiPF_6$ was 1.0 M, and 1.0 wt% of lithium nitrate ($LiNO_3$) was then added to prepare an electrolyte for a lithium secondary battery of the present disclosure.

(Secondary Battery Preparation)

A lithium secondary battery was prepared in the same manner as in Example 1 except that the positive electrode prepared by the above-described method was used, and 4.65 g of the above-prepared electrolyte for a lithium secondary battery was injected (see Table 1 below).

Example 5.

(Electrolyte Preparation)

$LiPF_6$ was dissolved in an organic solvent, in which gamma-butyrolactone and ethylene carbonate were mixed in a volume ratio of 70:30, such that a concentration of the $LiPF_6$ was 1.0 M, and 1.0 wt% of lithium nitrate ($LiNO_3$) was then added to prepare an electrolyte for a lithium secondary battery of the present disclosure.

(Secondary Battery Preparation)

A lithium secondary battery was prepared in the same manner as in Example 4 except that 6.43 g of the above-prepared electrolyte for a lithium secondary battery was injected (see Table 1 below).

Example 6.

(Electrolyte Preparation)

$LiPF_6$ was dissolved in an organic solvent, in which gamma-butyrolactone and ethylene carbonate were mixed in a volume ratio of 70:30, such that a concentration of the $LiPF_6$ was 1.0 M, and 1.0 wt% of lithium nitrate ($LiNO_3$) was then added to prepare an electrolyte for a lithium secondary battery of the present disclosure.

(Secondary Battery Preparation)

A lithium secondary battery was prepared in the same manner as in Example 4 except that 8.45 g of the above-prepared electrolyte for a lithium secondary battery was injected (see Table 1 below).

Example 7.

(Positive Electrode Preparation)

A positive electrode active material ($LiFePO_4$), a conductive agent (carbon black), and a binder (polyvinylidene fluoride, PVDF) were added in a weight ratio of 96:1:3 to N-methyl-2-pyrrolidone (NMP), as a solvent, to prepare a positive electrode active material slurry (solid content 67 wt%). A 15 $\mu$m thick positive electrode collector (Al thin film, total area of surfaces of the positive electrode collector: 312 $cm^2$) was coated with the positive electrode active material slurry, dried, and roll-pressed to prepare a positive electrode (loading amount of the positive electrode: 0.048 $mg/cm^2$, loading amount base on single surface of the positive electrode: 0.024 $mg/cm^2$, porosity of the positive electrode material mixture layer: 24%).

(Negative Electrode Preparation)

A negative electrode active material (artificial graphite 100%), CMC-SBR as a binder, and carbon black as a conductive agent were added to distilled water, as a solvent, in a weight ratio of 96:3.5:0.5 to prepare a negative electrode active material slurry (solid content 53 wt%). An 8 $\mu$m thick negative electrode collector (Cu thin film) was coated with the negative electrode active material slurry, dried, and roll-pressed to prepare a negative electrode (porosity of the negative electrode material mixture layer: 26%).

(Electrolyte Preparation)

$LiPF_6$ was dissolved in an organic solvent, in which gamma-butyrolactone and ethylene carbonate were mixed in a volume ratio of 70:30, such that a concentration of the $LiPF_6$ was 1.0 M, and 0.5 wt% of lithium nitrate ($LiNO_3$) was then added to prepare an electrolyte for a lithium secondary battery of the present disclosure.

(Secondary Battery Preparation)

An electrode assembly was prepared by a conventional method of sequentially stacking the positive electrode and the negative electrode, which had been prepared by the above-described method, together with a polyethylene porous film, and was then accommodated in a pouch type secondary battery case, and 3.10 g of the above-prepared electrolyte for a lithium secondary battery was injected to prepare a lithium secondary battery (see Table 1 below).

Example 8.

(Electrolyte Preparation)

$LiPF_6$ was dissolved in an organic solvent, in which gamma-butyrolactone and ethylene carbonate were mixed in a volume ratio of 70:30, such that a concentration of the $LiPF_6$ was 1.0 M, and 0.5 wt% of lithium nitrate ($LiNO_3$) was then added to prepare an electrolyte for a lithium secondary battery of the present disclosure.

(Secondary Battery Preparation)

A lithium secondary battery was prepared in the same manner as in Example 7 except that 3.57 g of the above-prepared electrolyte for a lithium secondary battery was injected (see Table 1 below).

Example 9.

(Electrolyte Preparation)

$LiPF_6$ was dissolved in an organic solvent, in which gamma-butyrolactone and ethylene carbonate were mixed in a volume ratio of 70:30, such that a concentration of the $LiPF_6$ was 1.0 M, and 0.5 wt% of lithium nitrate ($LiNO_3$) was then added to prepare an electrolyte for a lithium secondary battery of the present disclosure.

(Secondary Battery Preparation)

A lithium secondary battery was prepared in the same manner as in Example 7 except that 4.77 g of the above-prepared electrolyte for a lithium secondary battery was injected (see Table 1 below).

Example 10.

(Positive Electrode Preparation)

A positive electrode active material ($LiFePO_4$), a conductive agent (carbon black), and a binder (polyvinylidene fluoride, PVDF) were added in a weight ratio of 96:1:3 to N-methyl-2-pyrrolidone (NMP), as a solvent, to prepare a positive electrode active material slurry (solid content 67 wt%). A 15 $\mu$m thick positive electrode collector (Al thin film, total area of surfaces of the positive electrode collector: 435 $cm^2$) was coated with the positive electrode active material slurry, dried, and roll-pressed to prepare a positive electrode (loading amount of the positive electrode: 0.064 $mg/cm^2$, loading amount base on single surface of the positive electrode: 0.032 $mg/cm^2$, porosity of the positive electrode material mixture layer: 24%).

(Electrolyte Preparation)

$LiPF_6$ was dissolved in an organic solvent, in which gamma-butyrolactone and ethylene carbonate were mixed in a volume ratio of 70:30, such that a concentration of the $LiPF_6$ was 1.0 M, and 0.5 wt% of lithium nitrate ($LiNO_3$) was then added to prepare an electrolyte for a lithium secondary battery of the present disclosure.

(Secondary Battery Preparation)

A lithium secondary battery was prepared in the same manner as in Example 7 except that 3.43 g of the above-prepared electrolyte for a lithium secondary battery was injected (see Table 1 below).

Example 11.

(Electrolyte Preparation)

$LiPF_6$ was dissolved in an organic solvent, in which gamma-butyrolactone and ethylene carbonate were mixed in a volume ratio of 70:30, such that a concentration of the $LiPF_6$ was 1.0 M, and 0.5 wt% of lithium nitrate ($LiNO_3$) was then added to prepare an electrolyte for a lithium secondary battery of the present disclosure.

(Secondary Battery Preparation)

A lithium secondary battery was prepared in the same manner as in Example 10 except that 4.55 g of the above-prepared electrolyte for a lithium secondary battery was injected (see Table 1 below).

Example 12.

(Electrolyte Preparation)

$LiPF_6$ was dissolved in an organic solvent, in which gamma-butyrolactone and ethylene carbonate were mixed in a volume ratio of 70:30, such that a concentration of the $LiPF_6$ was 1.0 M, and 0.5 wt% of lithium nitrate ($LiNO_3$) was then added to prepare an electrolyte for a lithium secondary battery of the present disclosure.

(Secondary Battery Preparation)

A lithium secondary battery was prepared in the same manner as in Example 10 except that 6.07 g of the above-prepared electrolyte for a lithium secondary battery was injected (see Table 1 below).

Example 13.

(Positive Electrode Preparation)

A positive electrode active material ($LiFePO_4$), a conductive agent (carbon black), and a binder (polyvinylidene fluoride, PVDF) were added in a weight ratio of 96:1:3 to N-methyl-2-pyrrolidone (NMP), as a solvent, to prepare a positive electrode active material slurry (solid content 67 wt%). A 15 $\mu$m thick positive electrode collector (Al thin film, total area of surfaces of the positive electrode collector: 435 $cm^2$) was coated with the positive electrode active material slurry, dried, and roll-pressed to prepare a positive electrode (loading amount of the positive electrode: 0.048 $mg/cm^2$, loading amount base on single surface of the positive electrode: 0.024 $mg/cm^2$, porosity of the positive electrode material mixture layer: 24%).

(Negative Electrode Preparation)

A negative electrode active material (artificial graphite 100%), CMC-SBR as a binder, and carbon black as a conductive agent were added to distilled water, as a solvent, in a weight ratio of 96:3.5:0.5 to prepare a negative electrode active material slurry (solid content 53 wt%). An 8 $\mu$m thick negative electrode collector (Cu thin film) was coated with the negative electrode active material slurry, dried, and roll-pressed to prepare a negative electrode (porosity of the negative electrode material mixture layer: 26%).

(Electrolyte Preparation)

$LiPF_6$ was dissolved in an organic solvent, in which gamma-butyrolactone and ethylene carbonate were mixed in a volume ratio of 70:30, such that a concentration of the $LiPF_6$ was 1.0 M, and 0.25 wt% of lithium nitrate ($LiNO_3$) was then added to prepare an electrolyte for a lithium secondary battery of the present disclosure.

(Secondary Battery Preparation)

An electrode assembly was prepared by a conventional method of sequentially stacking the positive electrode and the negative electrode, which had been prepared by the above-described method, together with a polyethylene porous film, and was then accommodated in a pouch type secondary battery case, and 4.86 g of the above-prepared electrolyte for a lithium secondary battery was injected to prepare a lithium secondary battery (see Table 1 below).

Example 14.

(Positive Electrode Preparation)

A positive electrode active material ($LiFePO_4$), a conductive agent (carbon black), and a binder (polyvinylidene fluoride, PVDF) were added in a weight ratio of 96:1:3 to N-methyl-2-pyrrolidone (NMP), as a solvent, to prepare a positive electrode active material slurry (solid content 67 wt%). A 15 $\mu$m thick positive electrode collector (Al thin film, total area of surfaces of the positive electrode collector: 435 $cm^2$) was coated with the positive electrode active material slurry, dried, and roll-pressed to prepare a positive electrode (loading amount of the positive electrode: 0.064 $mg/cm^2$, loading amount base on single surface of the positive electrode: 0.032 $mg/cm^2$, porosity of the positive electrode material mixture layer: 24%).

(Negative Electrode Preparation)

A negative electrode active material (artificial graphite 100%), CMC-SBR as a binder, and carbon black as a conductive agent were added to distilled water, as a solvent, in a weight ratio of 96:3.5:0.5 to prepare a negative electrode active material slurry (solid content 53 wt%). An 8 $\mu$m thick negative electrode collector (Cu thin film) was coated with the negative electrode active material slurry, dried, and roll-pressed to prepare a negative electrode (porosity of the negative electrode material mixture layer: 26%).

(Electrolyte Preparation)

$LiPF_6$ was dissolved in an organic solvent, in which gamma-butyrolactone and ethylene carbonate were mixed in a volume ratio of 70:30, such that a concentration of the $LiPF_6$ was 1.0 M, and 0.25 wt% of lithium nitrate ($LiNO_3$) was then added to prepare an electrolyte for a lithium secondary battery of the present disclosure.

(Secondary Battery Preparation)

An electrode assembly was prepared by a conventional method of sequentially stacking the positive electrode and the negative electrode, which had been prepared by the above-described method, together with a polyethylene porous film, and was then accommodated in a pouch type secondary battery case, and 4.86 g of the above-prepared electrolyte for a lithium secondary battery was injected to prepare a lithium secondary battery (see Table 1 below).

Example 15.

(Positive Electrode Preparation)

A positive electrode active material ($LiFePO_4$), a conductive agent (carbon black), and a binder (polyvinylidene fluoride, PVDF) were added in a weight ratio of 96:1:3 to N-methyl-2-pyrrolidone (NMP), as a solvent, to prepare a positive electrode active material slurry (solid content 67 wt%). A 15 $\mu$m thick positive electrode collector (Al thin film, total area of surfaces of the positive electrode collector: 435 $cm^2$) was coated with the positive electrode active material slurry, dried, and roll-pressed to prepare a positive electrode (loading amount of the positive electrode: 0.048 $mg/cm^2$, loading amount base on single surface of the positive electrode: 0.024 $mg/cm^2$, porosity of the positive electrode material mixture layer: 24%).

(Negative Electrode Preparation)

A negative electrode active material (artificial graphite 100%), CMC-SBR as a binder, and carbon black as a conductive agent were added to distilled water, as a solvent, in a weight ratio of 96:3.5:0.5 to prepare a negative electrode active material slurry (solid content 53 wt%). An 8 $\mu$m thick negative electrode collector (Cu thin film) was coated with the negative electrode active material slurry, dried, and roll-pressed to prepare a negative electrode (porosity of the negative electrode material mixture layer: 26%).

(Electrolyte Preparation)

$LiPF_6$ was dissolved in an organic solvent, in which gamma-butyrolactone and ethylene carbonate were mixed in a volume ratio of 70:30, such that a concentration of the $LiPF_6$ was 1.0 M, and 3.0 wt% of lithium nitrate ($LiNO_3$) was then added to prepare an electrolyte for a lithium secondary battery of the present disclosure.

(Secondary Battery Preparation)

An electrode assembly was prepared by a conventional method of sequentially stacking the positive electrode and the negative electrode, which had been prepared by the above-described method, together with a polyethylene porous film, and was then accommodated in a pouch type secondary battery case, and 4.65 g of the above-prepared electrolyte for a lithium secondary battery was injected to prepare a lithium secondary battery (see Table 1 below).

Example 16.

(Positive Electrode Preparation)

A positive electrode active material ($LiFePO_4$), a conductive agent (carbon black), and a binder (polyvinylidene fluoride, PVDF) were added in a weight ratio of 96:1:3 to N-methyl-2-pyrrolidone (NMP), as a solvent, to prepare a positive electrode active material slurry (solid content 67 wt%). A 15 $\mu$m thick positive electrode collector (Al thin film, total area of surfaces of the positive electrode collector: 435 $cm^2$) was coated with the positive electrode active material slurry, dried, and roll-pressed to prepare a positive electrode (loading amount of the positive electrode: 0.064 $mg/cm^2$, loading amount base on single surface of the positive electrode: 0.032 $mg/cm^2$, porosity of the positive electrode material mixture layer: 24%).

(Negative Electrode Preparation)

A negative electrode active material (artificial graphite 100%), CMC-SBR as a binder, and carbon black as a conductive agent were added to distilled water, as a solvent, in a weight ratio of 96:3.5:0.5 to prepare a negative electrode active material slurry (solid content 53 wt%). An 8 $\mu$m thick negative electrode collector (Cu thin film) was coated with the negative electrode active material slurry, dried, and roll-pressed to prepare a negative electrode (porosity of the negative electrode material mixture layer: 26%).

(Electrolyte Preparation)

$LiPF_6$ was dissolved in an organic solvent, in which gamma-butyrolactone and ethylene carbonate were mixed in a volume ratio of 70:30, such that a concentration of the $LiPF_6$ was 1.0 M, and 3.0 wt% of lithium nitrate ($LiNO_3$) was then added to prepare an electrolyte for a lithium secondary battery of the present disclosure.

(Secondary Battery Preparation)

An electrode assembly was prepared by a conventional method of sequentially stacking the positive electrode and the negative electrode, which had been prepared by the above-described method, together with a polyethylene porous film, and was then accommodated in a pouch type secondary battery case, and 4.65 g of the above-prepared electrolyte for a lithium secondary battery was injected to prepare a lithium secondary battery (see Table 1 below).

Example 17.

(Positive Electrode Preparation)

A positive electrode active material (LiFePO$_4$), a conductive agent (carbon black), and a binder (polyvinylidene fluoride, PVDF) were added in a weight ratio of 96:1:3 to N-methyl-2-pyrrolidone (NMP), as a solvent, to prepare a positive electrode active material slurry (solid content 67 wt%). A 15 $\mu$m thick positive electrode collector (Al thin film, total area of surfaces of the positive electrode collector: 435 cm$^2$) was coated with the positive electrode active material slurry, dried, and roll-pressed to prepare a positive electrode (loading amount of the positive electrode: 0.048 mg/cm$^2$, loading amount base on single surface of the positive electrode: 0.024 mg/cm$^2$, porosity of the positive electrode material mixture layer: 24%).

(Negative Electrode Preparation)

A negative electrode active material (artificial graphite 100%), CMC-SBR as a binder, and carbon black as a conductive agent were added to distilled water, as a solvent, in a weight ratio of 96:3.5:0.5 to prepare a negative electrode active material slurry (solid content 53 wt%). An 8 $\mu$m thick negative electrode collector (Cu thin film) was coated with the negative electrode active material slurry, dried, and roll-pressed to prepare a negative electrode (porosity of the negative electrode material mixture layer: 26%).

(Electrolyte Preparation)

LiPF$_6$ was dissolved in an organic solvent, in which gamma-butyrolactone and ethylene carbonate were mixed in a volume ratio of 70:30, such that a concentration of the LiPF$_6$ was 1.0 M, and 0.5 wt% of lithium nitrate (LiNO$_3$) was then added to prepare an electrolyte for a lithium secondary battery of the present disclosure.

(Secondary Battery Preparation)

An electrode assembly was prepared by a conventional method of sequentially stacking the positive electrode and the negative electrode, which had been prepared by the above-described method, together with a polyethylene porous film, and was then accommodated in a pouch type secondary battery case, and 8.29 g of the above-prepared electrolyte for a lithium secondary battery was injected to prepare a lithium secondary battery (see Table 1 below).

Example 18.

(Electrolyte Preparation)

LiPF$_6$ was dissolved in an organic solvent, in which gamma-butyrolactone and ethylene carbonate were mixed in a volume ratio of 70:30, such that a concentration of the LiPF$_6$ was 1.0 M, and 1.0 wt% of lithium nitrate (LiNO$_3$) was then added to prepare an electrolyte for a lithium secondary battery of the present disclosure.

(Secondary Battery Preparation)

A lithium secondary battery was prepared in the same manner as in Example 17 except that 8.29 g of the above-prepared electrolyte for a lithium secondary battery was injected (see Table 1 below).

Example 19.

(Electrolyte Preparation)

LiPF$_6$ was dissolved in an organic solvent, in which gamma-butyrolactone and ethylene carbonate were mixed in a volume ratio of 70:30, such that a concentration of the LiPF$_6$ was 1.0 M, and 2.0 wt% of lithium nitrate (LiNO$_3$) was then added to prepare an electrolyte for a lithium secondary battery of the present disclosure.

(Secondary Battery Preparation)

A lithium secondary battery was prepared in the same manner as in Example 17 except that 8.29 g of the above-prepared electrolyte for a lithium secondary battery was injected (see Table 1 below).

Example 20.

(Electrolyte Preparation)

$LiPF_6$ was dissolved in an organic solvent, in which gamma-butyrolactone and ethylene carbonate were mixed in a volume ratio of 70:30, such that a concentration of the $LiPF_6$ was 1.0 M, and 3.0 wt% of lithium nitrate ($LiNO_3$) was then added to prepare an electrolyte for a lithium secondary battery of the present disclosure.

(Secondary Battery Preparation)

A lithium secondary battery was prepared in the same manner as in Example 17 except that 8.29 g of the above-prepared electrolyte for a lithium secondary battery was injected (see Table 1 below).

Example 21.

(Positive Electrode Preparation)

A positive electrode active material ($LiFePO_4$), a conductive agent (carbon black), and a binder (polyvinylidene fluoride, PVDF) were added in a weight ratio of 96:1:3 to N-methyl-2-pyrrolidone (NMP), as a solvent, to prepare a positive electrode active material slurry (solid content 67 wt%). A 15 $\mu$m thick positive electrode collector (Al thin film, total area of surfaces of the positive electrode collector: 280 $cm^2$) was coated with the positive electrode active material slurry, dried, and roll-pressed to prepare a positive electrode (loading amount of the positive electrode: 0.048 $mg/cm^2$, loading amount base on single surface of the positive electrode: 0.024 $mg/cm^2$, porosity of the positive electrode material mixture layer: 24%).

(Negative Electrode Preparation)

A negative electrode active material (artificial graphite 100%), CMC-SBR as a binder, and carbon black as a conductive agent were added to distilled water, as a solvent, in a weight ratio of 96:3.5:0.5 to prepare a negative electrode active material slurry (solid content 53 wt%). An 8 $\mu$m thick negative electrode collector (Cu thin film) was coated with the negative electrode active material slurry, dried, and roll-pressed to prepare a negative electrode (porosity of the negative electrode material mixture layer: 26%).

(Electrolyte Preparation)

$LiPF_6$ was dissolved in an organic solvent, in which gamma-butyrolactone and ethylene carbonate were mixed in a volume ratio of 70:30, such that a concentration of the $LiPF_6$ was 1.0 M, and 1.0 wt% of lithium nitrate ($LiNO_3$) was then added to prepare an electrolyte for a lithium secondary battery of the present disclosure.

(Secondary Battery Preparation)

An electrode assembly was prepared by a conventional method of sequentially stacking the positive electrode and the negative electrode, which had been prepared by the above-described method, together with a polyethylene porous film, and was then accommodated in a pouch type secondary battery case, and 3.65 g of the above-prepared electrolyte for a lithium secondary battery was injected to prepare a lithium secondary battery (see Table 1 below).

Example 22.

(Positive Electrode Preparation)

A positive electrode active material ($LiFePO_4$), a conductive agent (carbon black), and a binder (polyvinylidene fluoride, PVDF) were added in a weight ratio of 96:1:3 to N-methyl-2-pyrrolidone (NMP), as a solvent, to prepare a positive electrode active material slurry (solid content 67 wt%). A 15 $\mu$m thick positive electrode collector (Al thin film, total area of surfaces of the positive electrode collector: 465 $cm^2$) was coated with the positive electrode active material slurry, dried, and roll-pressed to prepare a positive electrode (loading amount of the positive electrode: 0.048 $mg/cm^2$, loading amount base on single surface of the positive electrode: 0.024 $mg/cm^2$, porosity of the positive electrode material mixture layer: 24%).

(Secondary Battery Preparation)

A lithium secondary battery was prepared in the same manner as in Example 21 except that the above-prepared positive electrode was used (see Table 1 below).

Example 23.

(Positive Electrode Preparation)

A positive electrode active material (LiFePO$_4$), a conductive agent (carbon black), and a binder (polyvinylidene fluoride, PVDF) were added in a weight ratio of 96:1:3 to N-methyl-2-pyrrolidone (NMP), as a solvent, to prepare a positive electrode active material slurry (solid content 67 wt%). A 15 $\mu$m thick positive electrode collector (Al thin film, total area of surfaces of the positive electrode collector: 435 cm$^2$) was coated with the positive electrode active material slurry, dried, and roll-pressed to prepare a positive electrode (loading amount of the positive electrode: 0.030 mg/cm$^2$, loading amount base on single surface of the positive electrode: 0.015 mg/cm$^2$, porosity of the positive electrode material mixture layer: 24%).

(Secondary Battery Preparation)

A lithium secondary battery was prepared in the same manner as in Example 21 except that the above-prepared positive electrode was used (see Table 1 below).

Example 24.

(Positive Electrode Preparation)

A positive electrode active material (LiFePO$_4$), a conductive agent (carbon black), and a binder (polyvinylidene fluoride, PVDF) were added in a weight ratio of 96:1:3 to N-methyl-2-pyrrolidone (NMP), as a solvent, to prepare a positive electrode active material slurry (solid content 67 wt%). A 15 $\mu$m thick positive electrode collector (Al thin film, total area of surfaces of the positive electrode collector: 435 cm$^2$) was coated with the positive electrode active material slurry, dried, and roll-pressed to prepare a positive electrode (loading amount of the positive electrode: 0.072 mg/cm$^2$, loading amount base on single surface of the positive electrode: 0.036 mg/cm$^2$, porosity of the positive electrode material mixture layer: 24%).

(Secondary Battery Preparation)

A lithium secondary battery was prepared in the same manner as in Example 21 except that the above-prepared positive electrode was used (see Table 1 below).

Example 25.

(Positive Electrode Preparation)

A positive electrode active material (LiFePO$_4$), a conductive agent (carbon black), and a binder (polyvinylidene fluoride, PVDF) were added in a weight ratio of 96:1:3 to N-methyl-2-pyrrolidone (NMP), as a solvent, to prepare a positive electrode active material slurry (solid content 67 wt%). A 15 $\mu$m thick positive electrode collector (Al thin film, total area of surfaces of the positive electrode collector: 435 cm$^2$) was coated with the positive electrode active material slurry, dried, and roll-pressed to prepare a positive electrode (loading amount of the positive electrode: 0.048 mg/cm$^2$, loading amount base on single surface of the positive electrode: 0.024 mg/cm$^2$, porosity of the positive electrode material mixture layer: 24%).

(Electrolyte Preparation)

LiPF$_6$ was dissolved in an organic solvent, in which gamma-butyrolactone and ethylene carbonate were mixed in a volume ratio of 70:30, such that a concentration of the LiPF$_6$ was 1.0 M, and 1.0 wt% of lithium nitrate (LiNO$_3$) was then added to prepare an electrolyte for a lithium secondary battery of the present disclosure.

(Secondary Battery Preparation)

A lithium secondary battery was prepared in the same manner as in Example 21 except that the above-prepared positive electrode was used, and 2.98 g of the above-prepared electrolyte for a lithium secondary battery was injected (see Table 1 below).

Example 26.

(Positive Electrode Preparation)

A positive electrode active material (LiFePO$_4$), a conductive agent (carbon black), and a binder (polyvinylidene fluoride, PVDF) were added in a weight ratio of 96:1:3 to N-methyl-2-pyrrolidone (NMP), as a solvent, to prepare a positive electrode active material slurry (solid content 67 wt%). A 15 $\mu$m thick positive electrode collector (Al thin film, total area of surfaces of the positive electrode collector: 435 cm$^2$) was coated with the positive electrode active material slurry, dried, and roll-pressed to prepare a positive electrode (loading amount of the positive electrode: 0.048 mg/cm$^2$, loading amount base on single surface of the positive electrode: 0.024 mg/cm$^2$, porosity of the positive electrode material mixture layer: 24%).

(Electrolyte Preparation)

LiPF$_6$ was dissolved in an organic solvent, in which gamma-butyrolactone and ethylene carbonate were mixed in a volume ratio of 70:30, such that a concentration of the LiPF$_6$ was 1.0 M, and 1.0 wt% of lithium nitrate (LiNO$_3$) was then added to prepare an electrolyte for a lithium secondary battery of the present disclosure.

(Secondary Battery Preparation)

A lithium secondary battery was prepared in the same manner as in Example 21 except that the above-prepared positive electrode was used, and 9.95 g of the above-prepared electrolyte for a lithium secondary battery was injected (see Table 1 below).

Comparative Example 1.

(Positive Electrode Preparation)

A positive electrode active material (LiFePO$_4$), a conductive agent (carbon black), and a binder (polyvinylidene fluoride, PVDF) were added in a weight ratio of 96:1:3 to N-methyl-2-pyrrolidone (NMP), as a solvent, to prepare a positive electrode active material slurry (solid content 67 wt%). A 15 $\mu$m thick positive electrode collector (Al thin film, total area of surfaces of the positive electrode collector: 312 cm$^2$) was coated with the positive electrode active material slurry, dried, and roll-pressed to prepare a positive electrode (loading amount of the positive electrode: 0.032 mg/cm$^2$, loading amount base on single surface of the positive electrode: 0.016 mg/cm$^2$, porosity of the positive electrode material mixture layer: 24%).

(Negative Electrode Preparation)

A negative electrode active material (artificial graphite 100%), CMC-SBR as a binder, and carbon black as a conductive agent were added to distilled water, as a solvent, in a weight ratio of 96:3.5:0.5 to prepare a negative electrode active material slurry (solid content 53 wt%). An 8 $\mu$m thick negative electrode collector (Cu thin film) was coated with the negative electrode active material slurry, dried, and roll-pressed to prepare a negative electrode (porosity of the negative electrode material mixture layer: 26%).

(Electrolyte Preparation)

LiPF$_6$ was dissolved in an organic solvent, in which gamma-butyrolactone and ethylene carbonate were mixed in a volume ratio of 70:30, such that a concentration of the LiPF$_6$ was 1.0 M, and 4.0 wt% of lithium nitrate (LiNO$_3$) was then added to prepare an electrolyte for a lithium secondary battery of the present disclosure.

(Secondary Battery Preparation)

An electrode assembly was prepared by a conventional method of sequentially stacking the positive electrode and the negative electrode, which had been prepared by the above-described method, together with a polyethylene porous film, and was then accommodated in a pouch type secondary battery case, and 8.50 g of the above-prepared electrolyte for a lithium secondary battery was injected to prepare a lithium secondary battery (see Table 1 below).

Comparative Example 2.

(Positive Electrode Preparation)

A positive electrode active material ($LiFePO_4$), a conductive agent (carbon black), and a binder (polyvinylidene fluoride, PVDF) were added in a weight ratio of 96:1:3 to N-methyl-2-pyrrolidone (NMP), as a solvent, to prepare a positive electrode active material slurry (solid content 67 wt%). A 15 $\mu$m thick positive electrode collector (Al thin film, total area of surfaces of the positive electrode collector: 312 $cm^2$) was coated with the positive electrode active material slurry, dried, and roll-pressed to prepare a positive electrode (loading amount of the positive electrode: 0.064 mg/$cm^2$, loading amount base on single surface of the positive electrode: 0.032 mg/$cm^2$, porosity of the positive electrode material mixture layer: 24%).

(Negative Electrode Preparation)

A negative electrode active material (artificial graphite 100%), CMC-SBR as a binder, and carbon black as a conductive agent were added to distilled water, as a solvent, in a weight ratio of 96:3.5:0.5 to prepare a negative electrode active material slurry (solid content 53 wt%). An 8 $\mu$m thick negative electrode collector (Cu thin film) was coated with the negative electrode active material slurry, dried, and roll-pressed to prepare a negative electrode (porosity of the negative electrode material mixture layer: 26%).

(Electrolyte Preparation)

$LiPF_6$ was dissolved in an organic solvent, in which gamma-butyrolactone and ethylene carbonate were mixed in a volume ratio of 70:30, such that a concentration of the $LiPF_6$ was 1.0 M, and 11.0 wt% of lithium nitrate ($LiNO_3$) was then added to prepare an electrolyte for a lithium secondary battery of the present disclosure.

(Secondary Battery Preparation)

An electrode assembly was prepared by a conventional method of sequentially stacking the positive electrode and the negative electrode, which had been prepared by the above-described method, together with a polyethylene porous film, and was then accommodated in a pouch type secondary battery case, and 4.77 g of the above-prepared electrolyte for a lithium secondary battery was injected to prepare a lithium secondary battery (see Table 1 below).

Comparative Example 3.

(Positive Electrode Preparation)

A positive electrode active material ($LiFePO_4$), a conductive agent (carbon black), and a binder (polyvinylidene fluoride, PVDF) were added in a weight ratio of 96:1:3 to N-methyl-2-pyrrolidone (NMP), as a solvent, to prepare a positive electrode active material slurry (solid content 67 wt%). A 15 $\mu$m thick positive electrode collector (Al thin film, total area of surfaces of the positive electrode collector: 435 $cm^2$) was coated with the positive electrode active material slurry, dried, and roll-pressed to prepare a positive electrode (loading amount of the positive electrode: 0.048 mg/$cm^2$, loading amount base on single surface of the positive electrode: 0.024 mg/$cm^2$, porosity of the positive electrode material mixture layer: 24%).

(Negative Electrode Preparation)

A negative electrode active material (artificial graphite 100%), CMC-SBR as a binder, and carbon black as a conductive agent were added to distilled water, as a solvent, in a weight ratio of 96:3.5:0.5 to prepare a negative electrode active material slurry (solid content 53 wt%). An 8 $\mu$m thick negative electrode collector (Cu thin film) was coated with the negative electrode active material slurry, dried, and roll-pressed to prepare a negative electrode (porosity of the negative electrode material mixture layer: 26%).

(Electrolyte Preparation)

$LiPF_6$ was dissolved in an organic solvent, in which gamma-butyrolactone and ethylene carbonate were mixed in a volume ratio of 70:30, such that a concentration of the $LiPF_6$ was 1.0 M, and 0.025 wt% of lithium nitrate ($LiNO_3$) was then added to prepare an electrolyte for a lithium secondary battery of the present disclosure.

(Secondary Battery Preparation)

An electrode assembly was prepared by a conventional method of sequentially stacking the positive electrode and the negative electrode, which had been prepared by the above-described method, together with a polyethylene porous film, and was then accommodated in a pouch type secondary battery case, and 3.48 g of the above-prepared electrolyte for a lithium secondary battery was injected to prepare a lithium secondary battery (see Table 1 below).

Comparative Example 4.

(Positive Electrode Preparation)

A positive electrode active material ($LiFePO_4$), a conductive agent (carbon black), and a binder (polyvinylidene fluoride, PVDF) were added in a weight ratio of 96:1:3 to N-methyl-2-pyrrolidone (NMP), as a solvent, to prepare a positive electrode active material slurry (solid content 67 wt%). A 15 $\mu$m thick positive electrode collector (Al thin film, total area of surfaces of the positive electrode collector: 435 $cm^2$) was coated with the positive electrode active material slurry, dried, and roll-pressed to prepare a positive electrode (loading amount of the positive electrode: 0.048 mg/$cm^2$, loading amount base on single surface of the positive electrode: 0.024 mg/$cm^2$, porosity of the positive electrode material mixture layer: 24%).

(Negative Electrode Preparation)

A negative electrode active material (artificial graphite 100%), CMC-SBR as a binder, and carbon black as a conductive agent were added to distilled water, as a solvent, in a weight ratio of 96:3.5:0.5 to prepare a negative electrode active material slurry (solid content 53 wt%). An 8 $\mu$m thick negative electrode collector (Cu thin film) was coated with the negative electrode active material slurry, dried, and roll-pressed to prepare a negative electrode (porosity of the negative electrode material mixture layer: 26%).

(Electrolyte Preparation)

$LiPF_6$ was dissolved in an organic solvent, in which gamma-butyrolactone and ethylene carbonate were mixed in a volume ratio of 70:30, such that a concentration of the $LiPF_6$ was 1.0 M, and 6.5 wt% of lithium nitrate ($LiNO_3$) was then added to prepare an electrolyte for a lithium secondary battery of the present disclosure.

(Secondary Battery Preparation)

An electrode assembly was prepared by a conventional method of sequentially stacking the positive electrode and the negative electrode, which had been prepared by the above-described method, together with a polyethylene porous film, and was then accommodated in a pouch type secondary battery case, and 8.29 g of the above-prepared electrolyte for a lithium secondary battery was injected to prepare a lithium secondary battery (see Table 1 below).

Comparative Example 5.

(Positive Electrode Preparation)

A positive electrode active material ($LiFePO_4$), a conductive agent (carbon black), and a binder (polyvinylidene fluoride, PVDF) were added in a weight ratio of 96:1:3 to N-methyl-2-pyrrolidone (NMP), as a solvent, to prepare a positive electrode active material slurry (solid content 67 wt%). A 15 $\mu$m thick positive electrode collector (Al thin film, total area of surfaces of the positive electrode collector: 435 $cm^2$) was coated with the positive electrode active material slurry, dried, and roll-pressed to prepare a positive electrode (loading amount of the positive electrode: 0.064 mg/$cm^2$, loading amount base on single surface of the positive electrode: 0.032 mg/$cm^2$, porosity of the positive electrode material mixture layer:

24%).

(Negative Electrode Preparation)

A negative electrode active material (artificial graphite 100%), CMC-SBR as a binder, and carbon black as a conductive agent were added to distilled water, as a solvent, in a weight ratio of 96:3.5:0.5 to prepare a negative electrode active material slurry (solid content 53 wt%). An 8 $\mu$m thick negative electrode collector (Cu thin film) was coated with the negative electrode active material slurry, dried, and roll-pressed to prepare a negative electrode (porosity of the negative electrode material mixture layer: 26%).

(Electrolyte Preparation)

$LiPF_6$ was dissolved in an organic solvent, in which gamma-butyrolactone and ethylene carbonate were mixed in a volume ratio of 70:30, such that a concentration of the $LiPF_6$ was 1.0 M, and 0.02 wt% of lithium nitrate ($LiNO_3$) was then added to prepare an electrolyte for a lithium secondary battery of the present disclosure.

(Secondary Battery Preparation)

An electrode assembly was prepared by a conventional method of sequentially stacking the positive electrode and the negative electrode, which had been prepared by the above-described method, together with a polyethylene porous film, and was then accommodated in a pouch type secondary battery case, and 3.00 g of the above-prepared electrolyte for a lithium secondary battery was injected to prepare a lithium secondary battery (see Table 1 below).

Comparative Example 6.

(Positive Electrode Preparation)

A positive electrode active material ($LiFePO_4$), a conductive agent (carbon black), and a binder (polyvinylidene fluoride, PVDF) were added in a weight ratio of 96:1:3 to N-methyl-2-pyrrolidone (NMP), as a solvent, to prepare a positive electrode active material slurry (solid content 67 wt%). A 15 $\mu$m thick positive electrode collector (Al thin film, total area of surfaces of the positive electrode collector: 435 $cm^2$) was coated with the positive electrode active material slurry, dried, and roll-pressed to prepare a positive electrode (loading amount of the positive electrode: 0.064 $mg/cm^2$, loading amount base on single surface of the positive electrode: 0.032 $mg/cm^2$, porosity of the positive electrode material mixture layer: 24%).

(Negative Electrode Preparation)

A negative electrode active material (artificial graphite 100%), CMC-SBR as a binder, and carbon black as a conductive agent were added to distilled water, as a solvent, in a weight ratio of 96:3.5:0.5 to prepare a negative electrode active material slurry (solid content 53 wt%). An 8 $\mu$m thick negative electrode collector (Cu thin film) was coated with the negative electrode active material slurry, dried, and roll-pressed to prepare a negative electrode (porosity of the negative electrode material mixture layer: 26%).

(Electrolyte Preparation)

$LiPF_6$ was dissolved in an organic solvent, in which gamma-butyrolactone and ethylene carbonate were mixed in a volume ratio of 70:30, such that a concentration of the $LiPF_6$ was 1.0 M, and 12.0 wt% of lithium nitrate ($LiNO_3$) was then added to prepare an electrolyte for a lithium secondary battery of the present disclosure.

(Secondary Battery Preparation)

An electrode assembly was prepared by a conventional method of sequentially stacking the positive electrode and the negative electrode, which had been prepared by the above-described method, together with a polyethylene porous film, and was then accommodated in a pouch type secondary battery case, and 6.43 g of the above-prepared electrolyte for a lithium secondary battery was injected to prepare a lithium secondary battery (see Table 1 below).

[Table 1]

| | Total area of surfaces of the positive electrode collector (cm$^2$) | Loading amount of the positive electrode (g/cm$^2$) | Total amount of the electrolyte injected (g) | Amount of lithium nitrate (LiNO$_3$) (%) | Value calculated when substituted into Equation 1 |
|---|---|---|---|---|---|
| Example 1 | 435 | 0.048 | 3.65 | 1 | 0.0035 |
| Example 2 | | 0.048 | 4.98 | | 0.0048 |
| Example 3 | | 0.048 | 6.64 | | 0.0064 |
| Example 4 | | 0.064 | 4.65 | | 0.0033 |
| Example 5 | | 0.064 | 6.43 | | 0.0046 |
| Example 6 | | 0.064 | 8.45 | | 0.0061 |
| Example 7 | 312 | 0.048 | 3.10 | 0.5 | 0.0021 |
| Example 8 | | 0.048 | 3.57 | | 0.0024 |
| Example 9 | | 0.048 | 4.77 | | 0.0032 |
| Example 10 | | 0.064 | 3.43 | | 0.0017 |
| Example 11 | | 0.064 | 4.55 | | 0.0023 |
| Example 12 | | 0.064 | 6.07 | | 0.0030 |
| Example 13 | 435 | 0.048 | 4.86 | 0.25 | 0.0012 |
| Example 14 | | 0.064 | 4.86 | 0.25 | 0.0009 |
| Example 15 | | 0.048 | 4.65 | 3.0 | 0.0134 |
| Example 16 | | 0.064 | 4.65 | 3.0 | 0.0100 |
| Example 17 | | 0.048 | 8.29 | 0.5 | 0.0040 |
| Example 18 | | | | 1.0 | 0.0079 |
| Example 19 | | | | 2.0 | 0.0159 |
| Example 20 | | | | 3.0 | 0.0238 |
| Example 21 | 280 | 0.048 | 3.65 | 1 | 0.0054 |
| Example 22 | 465 | 0.048 | 3.65 | | 0.0033 |
| Example 23 | 435 | 0.030 | 3.65 | | 0.0056 |
| Example 24 | 435 | 0.072 | 3.65 | | 0.0023 |
| Example 25 | 435 | 0.048 | 2.98 | | 0.0029 |
| Example 26 | 435 | 0.048 | 9.95 | | 0.0095 |
| Comparative Example 1 | 312 | 0.032 | 8.50 | 4.0 | 0.0681 |
| Comparative Example 2 | 312 | 0.064 | 4.77 | 11.0 | 0.0526 |
| Comparative Example 3 | 435 | 0.048 | 3.48 | 0.025 | 0.00008 |
| Comparative Example 4 | 435 | 0.048 | 8.29 | 6.5 | 0.0516 |
| Comparative Example 5 | 435 | 0.064 | 3.00 | 0.02 | 0.00004 |
| Comparative Example 6 | 435 | 0.064 | 6.43 | 12.0 | 0.0554 |

[Experimental Examples]

Experimental Example 1. Evaluation of High-temperature (45°C) Cycle Characteristics

Each of the lithium secondary batteries prepared in the examples and the comparative examples was charged at 0.1 C rate to a state of charge (SOC) of 64% at a high temperature (55°C), and then subjected to aging (48 hours) and a degassing process to perform a formation process.

After the formation process was completed, each lithium secondary battery was charged at 0.1 C rate to 3.8 V under constant current/constant voltage conditions at room temperature (25°C), and discharged at 0.33 C rate to 2.5 V under constant current conditions to check initial capacity.

Subsequently, after charging of each lithium secondary batteries at 0.33 C rate to 3.8 V under constant current/constant voltage conditions at a high temperature (45°C) and discharging of each lithium secondary battery at 0.33 C rate to 2.5 V under constant current conditions were set as 1 cycle and 100 cycles were performed, discharge capacity was measured. Operation of the lithium secondary battery was performed using PNE-0506 charge/discharge equipment (manufacturer: PNE solution)

After capacity retention (%) after high-temperature cycles was calculated using a ratio of the 100th discharge capacity to the initial capacity obtained, the results thereof are presented in Table 2 below.

Experimental Example 2. Evaluation of Low-temperature (-10°C) Cycle Characteristics

Each of the lithium secondary batteries prepared in the examples and the comparative examples was charged at 0.1 C rate to an SOC of 64% at a high temperature (55°C), and then subjected to aging (48 hours) and a degassing process to perform a formation process.

After the formation process was completed, each lithium secondary battery was charged at 0.1 C rate to 3.8 V under constant current/constant voltage conditions at room temperature (25°C), and discharged at 0.33 C rate to 2.5 V under constant current conditions to check initial capacity.

Subsequently, after charging of each lithium secondary batteries at 0.2 C rate to 3.8 V under constant current/constant voltage conditions at a low temperature (-10°C) and discharging of each lithium secondary battery at 0.33 C rate to 2.0 V under constant current conditions were set as 1 cycle and 200 cycles were performed, discharge capacity was measured. Operation of the lithium secondary battery was performed using PNE-0506 charge/discharge equipment (manufacturer: PNE solution)

After capacity retention (%) after low-temperature cycles was calculated using the obtained initial capacity and 200th discharge capacity, the results thereof are presented in Table 2 below.

[Table 2]

|  |  | Capacity retention after high-temperature cycles (%) | Capacity retention after low-temperature cycles (%) |
|---|---|---|---|
|  | Example 1 | 95.1 | 99.0 |
|  | Example 2 | 94.8 | 99.1 |
|  | Example 3 | 95.3 | 98.8 |
|  | Example 4 | 95.4 | 98.4 |
|  | Example 5 | 96.0 | 98.9 |
|  | Example 6 | 94.9 | 98.5 |
|  | Example 7 | 94.7 | 98.2 |
|  | Example 8 | 95.7 | 98.7 |
|  | Example 9 | 94.3 | 99.1 |
|  | Example 10 | 94.8 | 97.9 |
|  | Example 11 | 94.7 | 98.0 |
|  | Example 12 | 95.0 | 97.8 |
|  | Example 13 | 94.6 | 95.5 |
|  | Example 14 | 94.5 | 96.3 |
|  | Example 15 | 94.2 | 95.7 |
|  | Example 16 | 94.9 | 96.6 |
|  | Example 17 | 95.0 | 97.1 |
|  | Example 18 | 94.8 | 97.7 |

(continued)

| | Capacity retention after high-temperature cycles (%) | Capacity retention after low-temperature cycles (%) |
|---|---|---|
| Example 19 | 95.1 | 96.2 |
| Example 20 | 94.5 | 96.0 |
| Example 21 | 93.1 | 78.4 |
| Example 22 | 93.2 | 79.8 |
| Example 23 | 93.6 | 77.3 |
| Example 24 | 93.5 | 71.8 |
| Example 25 | 92.8 | 80.2 |
| Example 26 | 93.3 | 80.1 |
| Comparative Example 1 | 90.1 | 64.4 |
| Comparative Example 2 | 89.9 | 50.1 |
| Comparative Example 3 | 88.3 | 45.0 |
| Comparative Example 4 | 89.5 | 67.7 |
| Comparative Example 5 | 89.7 | 38.5 |
| Comparative Example 6 | 88.9 | 65.9 |

Referring to Table 2, with respect to the lithium secondary batteries prepared in Examples 1 to 26 of the present disclosure, it may be confirmed that both capacity retention after high-temperature cycles and capacity retention after low-temperature cycles were improved in comparison to those of the lithium secondary batteries of Comparative Examples 1 to 6.

Although the present disclosure has been described above with reference to preferred embodiments thereof, it will be understood by those skilled in the art or those of ordinary skill in the art that various modifications and changes may be made therein without departing from the spirit and technical scope of the present disclosure described in the accompanying claims. Accordingly, the technical scope of the present disclosure should not be limited to the contents described in the detailed description of the specification, but should be determined by the claims.

**Claims**

1. A lithium secondary battery comprising a positive electrode, a negative electrode, a separator, and an electrolyte,

wherein the positive electrode comprises lithium iron phosphate as a positive electrode active material, and the electrolyte comprises a lithium salt; a first organic solvent; a second organic solvent; and an additive,
wherein the first organic solvent is a cyclic lactone compound,
the second organic solvent is a carbonate-based organic solvent,
the additive is lithium nitrate ($LiNO_3$), and satisfies following Equation 1:

[Equation 1]

$$0.0001 \leq \frac{0.02 \times (A \times B)}{(C \times D)} \leq 0.050$$

wherein, in Equation 1,

A is a total amount (g) of the electrolyte injected into the lithium secondary battery,
B is an amount (wt%) of the lithium nitrate ($LiNO_3$) contained in the electrolyte injected,

C is a loading amount ($g/cm^2$) of the positive electrode, and
D is a total area ($cm^2$) of surfaces of a positive electrode collector.

2. The lithium secondary battery of claim 1, wherein the lithium iron phosphate comprises a compound represented by Formula 1:

[Formula 1] $Li_{1+a}Fe_xM_y(PO_{4-b})X'_b$

wherein, in [Formula 1],

M is any one selected from the group consisting of aluminum (Al), magnesium (Mg), nickel (Ni), cobalt (Co), manganese (Mn), titanium (Ti), gallium (Ga), copper (Cu), vanadium (V), niobium (Nb), zirconium (Zr), cerium (Ce), indium (In), zinc (Zn), and yttrium (Y),
X' is at least one element selected from the group consisting of fluorine (F), sulfur (S), and nitrogen (N), and
$-0.5 \leq a \leq 0.5$, $0 < x \leq 1$, $0 \leq y \leq 1$, and $0 \leq b \leq 0.3$.

3. The lithium secondary battery of claim 2, wherein the lithium iron phosphate is lithium iron phosphate ($LiFePO_4$) or lithium manganese iron phosphate ($LiFeMnPO_4$).

4. The lithium secondary battery of claim 1, wherein the cyclic lactone compound comprises gamma-butyrolactone.

5. The lithium secondary battery of claim 1, wherein the carbonate-based organic solvent is a cyclic carbonate-based organic solvent.

6. The lithium secondary battery of claim 1, wherein the first organic solvent and the second organic solvent are present in a volume ratio of 50:50 to 99:1.

7. The lithium secondary battery of claim 1, wherein, in Equation 1, A is in a range of 3.0 g to 8.5 g.

8. The lithium secondary battery of claim 1, wherein, in Equation 1, C is in a range of $0.032\ g/cm^2$ to $0.064\ g/cm^2$.

9. The lithium secondary battery of claim 1, wherein, in Equation 1, D is in a range of $310\ cm^2$ to $450\ cm^2$.

10. The lithium secondary battery of claim 1, wherein the negative electrode comprises a carbon-based active material, a silicon-based active material, or a mixture of the carbon-based active material and the silicon-based active material.

11. The lithium secondary battery of claim 1, wherein a capacity of the lithium secondary battery is in a range of 1,000 mAh to 3,000 mAh.

# EP 4 700 894 A1

## INTERNATIONAL SEARCH REPORT

| International application No. |
| --- |
| **PCT/KR2024/018389** |

| A. | CLASSIFICATION OF SUBJECT MATTER |
| --- | --- |

**H01M 10/0567**(2010.01)i; **H01M 4/58**(2010.01)i; **H01M 4/36**(2006.01)i; **H01M 10/052**(2010.01)i; **H01M 4/38**(2006.01)i; **H01M 4/48**(2010.01)i; **H01M 4/587**(2010.01)i; **H01M 10/0569**(2010.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 10/0567(2010.01); H01M 10/052(2010.01); H01M 10/0525(2010.01); H01M 10/058(2010.01); H01M 10/40(2006.01); H01M 4/131(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지 (lithium secondary battery), 리튬철 인산화물 (lithium iron phosphate), 첨가제 (additive), 질산리튬 (lithium nitrate, LiNO3), 유기용매 (organic solvent)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | KR 10-2015-0030031 A (SAMSUNG SDI CO., LTD.) 19 March 2015 (2015-03-19) <br> See abstract; paragraphs [0035], [0036], [0039], [0040], [0051] and [0072]; and claim 1. | 1-11 |
| A | KR 10-2023-0120376 A (SK ON CO., LTD.) 17 August 2023 (2023-08-17) <br> See abstract; and claims 1-12. | 1-11 |
| A | KR 10-2023-0081674 A (LG CHEM, LTD.) 07 June 2023 (2023-06-07) <br> See abstract; and claims 1-12. | 1-11 |
| A | JP 2000-040523 A (WILSON GREATBATCH LTD.) 08 February 2000 (2000-02-08) <br> See abstract; and claims 1-6 and 10-12. | 1-11 |
| A | WO 2023-082918 A1 (CONTEMPORARY AMPEREX TECHNOLOGY CO., LIMITED) 19 May 2023 (2023-05-19) <br> See abstract; and claims 1-10. | 1-11 |

☑ Further documents are listed in the continuation of Box C.     ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **28 February 2025** | **28 February 2025** |

| Name and mailing address of the ISA/KR | Authorized officer |
| --- | --- |
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/018389** |

### C. DOCUMENTS CONSIDERED TO BE RELEVANT

| Category* | Citation of document, with indication, where appropriate, of the relevant passages | Relevant to claim No. |
| --- | --- | --- |
| A | YANG, Y. et al. Synergistic effect of vinylene carbonate (VC) and LiNO3 as functional additives on interphase modulation for high performance SiO anodes. Journal of Power Sources. 2021, vol. 514, thesis no. 230595, pp. 1-9.<br>See abstract. | 1-11 |

Form PCT/ISA/210 (second sheet) (July 2022)

**INTERNATIONAL SEARCH REPORT**
Information on patent family members

International application No.

**PCT/KR2024/018389**

| Patent document cited in search report | | | Publication date (day/month/year) | Patent family member(s) | | | Publication date (day/month/year) |
|---|---|---|---|---|---|---|---|
| KR | 10-2015-0030031 | A | 19 March 2015 | KR | 10-1749186 | B1 | 03 July 2017 |
| | | | | US | 2015-0072247 | A1 | 12 March 2015 |
| | | | | US | 9831527 | B2 | 28 November 2017 |
| KR | 10-2023-0120376 | A | 17 August 2023 | DE | 102023103134 | A1 | 10 August 2023 |
| | | | | US | 2023-0253627 | A1 | 10 August 2023 |
| KR | 10-2023-0081674 | A | 07 June 2023 | | None | | |
| JP | 2000-040523 | A | 08 February 2000 | AU | 3910899 | A | 03 February 2000 |
| | | | | EP | 0971432 | A1 | 12 January 2000 |
| | | | | US | 6060184 | A | 09 May 2000 |
| WO | 2023-082918 | A1 | 19 May 2023 | CN | 115810797 | A | 17 March 2023 |
| | | | | CN | 117747952 | A | 22 March 2024 |
| | | | | EP | 4362156 | A1 | 01 May 2024 |
| | | | | EP | 4362156 | A4 | 08 January 2026 |
| | | | | JP | 2024-525681 | A | 12 July 2024 |
| | | | | KR | 10-2024-0019835 | A | 14 February 2024 |
| | | | | US | 2024-0258618 | A1 | 01 August 2024 |
| | | | | US | 2024-0266606 | A1 | 08 August 2024 |

Form PCT/ISA/210 (patent family annex) (July 2022)

**EP 4 700 894 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230189753

- KR 1020240165719